# EUROPEAN PATENT SPECIFICATION

(11) **EP 4 656 907 B1**
(45) Date of publication and mention of the grant of the patent: **29.07.2026**
(21) Application number: 25178743.8
(22) Date of filing: 26.05.2025
(51) Int. Cl.: F16H 57/02, F16H 61/28, F16H 63/18, F16H 63/46

(54) **STRADDLED VEHICLE**
MOTORRAD
VÉHICULE À SELLE

(30) Priority: 28.05.2024 JP 2024086413
(43) Date of publication of application: 03.12.2025
(73) Proprietor: Yamaha Hatsudoki Kabushiki Kaisha, Iwata-shi, Shizuoka 438-8501 (JP)
(72) Inventor: HIROSE, Ryotaro, Iwata-shi, Shizuoka, 4388501 (JP); MIURA, Tetsu, Iwata-shi, Shizuoka, 4388501 (JP); HATORI, Takuto, Iwata-shi, Shizuoka, 4388501 (JP); MINAMI, Kengo, Iwata-shi, Shizuoka, 4388501 (JP); SEKIYA, Yu, Iwata-shi, Shizuoka, 4388501 (JP); TAKAHASHI, Seigo, Iwata-shi, Shizuoka, 4388501 (JP); SAKAUE, Masaya, Iwata-shi, Shizuoka, 4388501 (JP); KATO, Hayate, Iwata-shi, Shizuoka, 4388501 (JP); HAYASHIDA, Isamu, Iwata-shi, Shizuoka, 4388501 (JP); TAKATANI, Kenji, Iwata-shi, Shizuoka, 4388501 (JP)
(74) Representative: Stöckeler, Ferdinand

(56) References cited:
- EP-B1- 2 149 488
- JP-B2- 6 419 625
- US-B2- 10 543 883

## Description

### Technical Field

The present invention relates to a straddled vehicle.

### Background Art

For example, PTL 1 shows a straddled vehicle including a transmission. The transmission is a multi-speed automatic transmission. The straddled vehicle of PTL 1, more specifically, includes a motor for rotating a shift spindle of the transmission, and a clutch configured to be manipulated for disconnection by a clutch lever disposed at the shift spindle.

In more detail, a spindle member and a reduction gear train are connected to the motor, and rotation of the motor transmitted through the spindle member and the reduction gear train is transmitted to the shift spindle. Fixed to the shift spindle is the clutch lever including a pin. The pin is engageable with a cam hole portion of a coupling arm portion of the clutch. As the motor operates, the shift spindle is rotated via the spindle member and the reduction gear train, to switch the gear stage. At this time, the pin of the clutch lever, which rotates together with the shift spindle, makes the coupling arm portion rotate while moving and rubbing in the cam hole portion of the coupling arm portion.

EP 2 149 488 B1 relates to a transmission control system comprising a detection device, a throttle opening adjustment mechanism, a shift mechanism, a clutch actuation mechanism, and a controller configured to, upon detection of a downshifting operation, increase the throttle opening to a first value, disconnect the clutch, change the gear position, decrease the throttle opening to a second value smaller than the first value but larger than a minimum value, and switch the clutch to the transmission state while maintaining the throttle opening at the second value.

US 10 543 883 B2 relates to a speed change apparatus for a vehicle comprising a transmission, a change mechanism, a shift spindle, an actuator, a shift spindle angle sensor, a controller, and a drum angle sensor, wherein the controller controls the shift spindle to disengage the clutch and operate the change mechanism through first, second, and third steps based on a clutch-disengaging shift spindle angle stored in memory and an output from the drum angle sensor corresponding to shallow engagement of the dog teeth.

### Citation List

### Patent Literature

PTL 1: JP 6 419625 B2

### Summary of Invention

### Technical Problem

In straddled vehicles, it may sometimes be desired that plural types of vehicles be manufactured so as to respond to different rider's orientations toward how to switch the gear stage while most parts of their vehicle bodies are standardized. More specifically, it may sometimes be desired that straddled vehicles be small and have a high degree of freedom in designing and manufacturing such that vehicles of different gear-shifting types, such as a vehicle of an electronic gear shifting type in which the gear stage is switched by an actuator and a vehicle of a manual type in which the gear stage is switched by a rider's manipulation force, can be designed and/or manufactured.

The present invention aims to provide a straddled vehicle that is small and has a high degree of freedom in designing and manufacturing such that vehicles of different gear-shifting types, such as a vehicle of an electronic gear shifting type in which the gear stage is switched by an actuator and a vehicle of a manual type in which the gear stage is switched by a rider's manipulation force, can be designed and/or manufactured so as to respond to rider's orientations.

### Solution to Problem

For example, the straddled vehicle of PTL 1 is of an electronic gear shifting type. In the straddled vehicle of PTL 1, rotation of the motor is transmitted through the reduction gear train. This is why the straddled vehicle is required to have a space for allowing gears included in the reduction gear train to rotate entirely. The reduction gear train transmits rotation through precise meshing of the gears. To be able to maintain the precise meshing, each of the gears is firmly supported by a casing having a high rigidity. To be specific, each gear of the reduction gear train has its opposite end portions supported by a casing such as a front casing and a gear casing. The casing is engaged with a power unit of the straddled vehicle. The casing is required to have a function for isolating the reduction gear train from the outside, in order to maintain a meshing lubricated state and a sealed state for preventing an obstacle to meshing, such as sand, from ingressing into a portion at which the gears are meshed.

In the clutch of the straddled vehicle of PTL 1, the pin disposed in the clutch lever presses the coupling arm portion so as to rotate the coupling arm portion while the clutch lever is rotating. The radius of rotation of the clutch lever, therefore, is the distance from the center of rotation of the shift spindle to the pin, which is the point of action. The radius of rotation of the coupling arm portion is also the distance from the center of rotation to the point of action at which contact with the pin takes place. Thus, the straddled vehicle of PTL 1 is required to have a space for allowing rotation of the shift spindle and a space for allowing rotation of the coupling arm portion. The distance from the center of rotation of the clutch lever to the point of action and the distance from the center of rotation of the coupling arm portion to the point of action are each in accordance with a distance over which a shifting force is transmitted, and are long. Each of the centers of rotation, which acts as a fulcrum, receives a high load according to the distance. Thus, a rotation shaft disposed at the center of rotation of each of the clutch lever and the coupling arm portion has opposite end portions thereof supported by the casing.

In this manner, in the straddled vehicle of PTL 1, a mechanism that transmits a force of the motor to the transmission and the clutch is accommodated in the casing engaged with the power unit, for the purpose of precise engagement, supporting a load of a rotation shaft, suppression of ingress of the obstacle, and maintenance of lubrication. That is, the transmission mechanism is accommodated in the casing of the power unit.

As described above, in straddled vehicles, it may sometimes be desired that plural types of vehicles be manufactured so as to respond to different rider's orientations toward how to switch the gear stage while most parts of their vehicle bodies are standardized. The inventors of the present invention have investigated a configuration for achieving a straddled vehicle that is small and has a high degree of freedom in designing and manufacturing such that vehicles of different gear-shifting types, such as a vehicle of an electronic gear shifting type in which the gear stage is switched by an actuator and a vehicle of a manual type in which the gear stage is switched by a rider's manipulation force, can be designed and/or manufactured so as to respond to rider's orientations.

For example, if a vehicle of a manual type is designed and/or manufactured, and then a vehicle of an electronic gear shifting type is to be designed and/or manufactured with reference to the mechanism shown in PTL 1, it is required that not only a mechanism for transmitting a force to a transmission and a clutch but also a power unit itself, including its casing, be changed largely.

The inventors of the present invention have conceived that a transmission mechanism for transmitting a rotational force of a shift/clutch shared actuator to a shifting shaft and a transmission mechanism for transmitting the rotational force to a clutch operation cam are each constituted by a link transmission mechanism including a link rod that is coupled to a link arm. The inventors of the present invention have conceived that both of the link transmission mechanisms are disposed outside a crank case and outside an engine cover.

The link rod of the link transmission mechanism moves in a longitudinal direction in which the link rod extends, to transmit a force. Thus, of a space that needs to be reserved for movement of the link rod, the width dimension perpendicular to the moving direction is irrelevant to a distance over which the force is transmitted, unlike in a case of gear engagement or direct engagement of arms, for example. The link arm coupled to the link rod can also be disposed in a space of rotation whose radius is from the center of rotation to a portion coupled to the link rod, irrespective of the distance over which the force is transmitted. Accordingly, the transmission mechanism can be concisely arranged irrespective of the distance over which the force from the motor is transmitted.

The link rod itself does not have to be supported by a casing. The distance from the fulcrum of the rotating link arm to the point of action is the distance from the center of rotation of the link arm to the portion coupled to the link rod. A load acting on the fulcrum is irrelevant to the length of the link rod. The load acting on the fulcrum can therefore be suppressed. This makes it possible to transmit the force without having the opposite ends of a rotation shaft of the link arm supported by the crank case or the engine cover, for example. In addition, meshing of gears, and a rubbing and moving portion can be excluded from the transmission mechanism. This makes an obstacle such as sand less influential. Accordingly, even though both of the transmission mechanisms are disposed outside the crank case and outside the engine cover, the transmitting function is less influenced.

Therefore, in a case of designing and/or manufacturing vehicles of an electronic gear shifting type and of a manual type, adoption of the above-described link transmission mechanisms makes it possible to obtain the electronic gear shifting type by adding the shift/clutch shared actuator to the vehicle of the manual type, while allowing both of the link transmission mechanisms to be disposed outside the crank case and outside the engine cover. In this case, it is possible to design and/or manufacture the vehicle of the electronic gear shifting type while making use of a basic structure of the crank case and the engine cover of the vehicle of the manual type.

Accordingly, a straddled vehicle can be achieved that is small and has a high degree of freedom in designing and manufacturing such that vehicles of different gear-shifting types, such as a vehicle of an electronic gear shifting type in which the gear stage is switched by an actuator and a vehicle of a manual type in which the gear stage is switched by a manipulation force, can be designed and/or manufactured so as to respond to rider's orientations.

Based on the knowledge described above, the inventors of the present invention have accomplished the present invention.

According to the present invention a straddled vehicle according to claim 1 is provided.

Preferred embodiments of the present invention are laid down in the dependent claims.

According to the present invention the claimed straddled vehicle includes the engine, the clutch, the multi-speed transmission, the shift/clutch shared actuator, the clutch link transmission mechanism, and the shift link transmission mechanism.

The engine has the power mechanism, the crank case, and the engine cover. The power mechanism generates power for driving the straddled vehicle. The power mechanism includes the crankshaft. For example, the power mechanism has not only the crankshaft but also a mechanism that generates power for driving the straddled vehicle, the mechanism being constituted by a piston, a connecting rod, a valve, a spark plug, a generator, and a crank position detection device. The crank case supports the crankshaft. The crank case may support mechanisms and parts other than the crankshaft. The engine cover is attached to the crank case. The engine cover accommodates a part of the power mechanism. The engine cover is attached to the crankshaft, and covers a generator disposed outside the crank case, for example. The engine cover is not particularly limited, and may accommodate a part, different from the generator, of the power mechanism that generates power.

The clutch has the clutch operation cam. The clutch disconnects and connects power transmission in accordance with rotation of the clutch operation cam.

The multi-speed transmission has plural gear stages. The multi-speed transmission has the shifting shaft. The multi-speed transmission switches the gear stages in accordance with rotation of the shifting shaft.

The shift/clutch shared actuator has the output rotation shaft and the electric actuator. The output rotation shaft outputs a rotational force that is produced by the electric actuator. The shift/clutch shared actuator outputs through the output rotation shaft such a rotational force so as to drive operations of the clutch and the multi-speed transmission.

The clutch link transmission mechanism has the first clutch link arm, the clutch link rod, and the second clutch link arm. The first clutch link arm is fixed to the clutch operation cam. The clutch link rod is coupled to the first clutch link arm. The second clutch link arm is coupled to the clutch link rod. The clutch link transmission mechanism transmits a rotational force of the output rotation shaft of the shift/clutch shared actuator to the clutch operation cam.

The shift link transmission mechanism has the first shift link arm, the shift link rod, and the second shift link arm. The first shift link arm is fixed to the shifting shaft. The shift link rod is coupled to the first shift link arm. The second shift link arm is coupled to the shift link rod. The shift link transmission mechanism transmits a rotational force of the output rotation shaft of the shift/clutch shared actuator to the shifting shaft.

Both the clutch link transmission mechanism and the shift link transmission mechanism are disposed outside the crank case and outside the engine cover.

The clutch link rod of the clutch link transmission mechanism moves in the direction of extension of the clutch link rod itself, for transmitting a force. The clutch link rod can, therefore, be arranged in a space that is obtained by adding a space for movement of the clutch link rod to a space occupied by the clutch link rod itself. The space added for movement of the clutch link rod is irrelevant to a distance over which the force is transmitted, unlike in a case of gear engagement or direct engagement of arms, for example. Thus, of the space that needs to be reserved for movement of the clutch link rod, the width dimension perpendicular to the moving direction is irrelevant to the distance over which the force is transmitted, unlike in a case of gear engagement or direct engagement of arms, for example. Each of the link arms coupled to the clutch link rod can be arranged in a space of rotation whose radius is from the center of rotation to a portion coupled to the clutch link rod, irrespective of the distance over which the force is transmitted. Accordingly, the clutch link transmission mechanism can be concisely arranged irrespective of the distance over which the force from the motor is transmitted.

The shift link rod of the shift link transmission mechanism moves in the direction of extension of the shift link rod itself, for transmitting a force. The shift link rod can, therefore, be arranged in a space that is obtained by adding a space for movement of the shift link rod to a space occupied by the shift link rod itself. The space added for movement of the shift link rod is irrelevant to a distance over which the force is transmitted, unlike in a case of gear engagement or direct engagement of arms, for example. Thus, of the space that needs to be reserved for movement of the shift link rod, the width dimension perpendicular to the moving direction is irrelevant to the distance over which the force is transmitted, unlike in a case of gear engagement or direct engagement of arms, for example. Each of the link arms coupled to the shift link rod can be arranged in a space of rotation whose radius is from the center of rotation to a position coupled to the shift link rod, irrespective of the distance over which the force is transmitted. Accordingly, the shift link transmission mechanism can be concisely arranged irrespective of the distance over which the force from the motor is transmitted.

The link rods themselves do not have to be supported by a casing. As for each of the first clutch link arm, the second clutch link arm, the first shift link arm, and the second shift link arm, too, the distance from the fulcrum of the rotating link arm to the point of action is the distance from the center of rotation of the link arm to the portion coupled to the link rod, and a load acting on the fulcrum is irrelevant to the length of the link rod. The load acting on the center of rotation, or the fulcrum, can be suppressed, because the distance from the center of rotation of the link arm to the portion coupled to the link rod, which is the point of action, can be suppressed irrespective of the distance over which the force is transmitted. This makes it possible to transmit the force without having the opposite ends of the rotation shaft of the link arm supported by the crank case or the engine cover, for example. In addition, meshing of gears, or a rubbing and moving portion can be excluded from the transmission mechanism. This makes an obstacle such as sand and dust less influential. Accordingly, even though both the clutch link transmission mechanism and the shift link transmission mechanism are disposed outside the crank case and outside the engine cover, the transmitting function is less influenced.

For example, in a case of designing and/or manufacturing vehicles of an electronic gear shifting type and of a manual type, adoption of the above-described link transmission mechanisms makes it possible to obtain the electronic gear shifting type by adding the shift/clutch shared actuator to the vehicle of the manual type, while allowing both of the link transmission mechanisms to be disposed outside the crank case and outside the engine cover. In this case, it is possible to design and/or manufacture the vehicle of the electronic gear shifting type by adding a part, while making use of a basic structure of the crank case and the engine cover of the vehicle of the manual type.

Accordingly, a straddled vehicle can be achieved that is small and has a high degree of freedom in designing and manufacturing such that vehicles of different gear-shifting types, such as a vehicle of an electronic gear shifting type in which the gear stage is switched by an actuator and a vehicle of a manual type in which the gear stage is switched by a manipulation force, can be designed and/or manufactured so as to respond to rider's orientations.

According to a preferred embodiment of the present invention, the straddled vehicle further includes a vehicle body frame to which the engine is attached, in which
the clutch and the multi-speed transmission are attached to the engine, and
the shift/clutch shared actuator is attached to the vehicle body frame.

In the straddled vehicle having the shift/clutch shared actuator attached to the vehicle body frame, the distance from the clutch operation cam of the clutch or from the shifting shaft of the multi-speed transmission to the output rotation shaft of the shift/clutch shared actuator is influenced by an accumulation of at least the following tolerances:
a tolerance of attachment of the shift/clutch shared actuator to the vehicle body frame;
a tolerance of attachment of the engine to the vehicle body frame; and
a tolerance of attachment of the clutch and the multi-speed transmission to the engine.

It is therefore likely that large tolerances in the distance from the clutch operation cam or from the shifting shaft to the output rotation shaft occur for each vehicle.

According to said preferred embodiment, the clutch operation cam and the output rotation shaft are coupled through the clutch link transmission mechanism. The shifting shaft and the output rotation shaft are coupled through the shift link transmission mechanism. The distance of transmission in each of the link transmission mechanisms can be adjusted more flexibly by a length adjustment mechanism of the link rod for example, as compared to transmission via a gear for example. Accordingly, a high degree of freedom, including the adjustment, can be obtained in designing and/or manufacturing the vehicle of the electronic gear shifting type.

According to a further preferred embodiment of the present invention,
the second shift link arm is fixed to the output rotation shaft of the shift/clutch shared actuator, and the second clutch link arm is fixed to the shifting shaft.

According to said preferred embodiment of the present invention, rotation of the output rotation shaft of the shift/clutch shared actuator is transmitted to the shifting shaft via the shift link transmission mechanism. Rotation of the shifting shaft is then transmitted to the clutch operation cam via the clutch link transmission mechanism. According to said preferred embodiment, the straddled vehicle suppresses concentrated arrangement of the link rods in the output rotation shaft of the shift/clutch shared actuator. Accordingly, the shift link transmission mechanism and the clutch link transmission mechanism can be arranged concisely.

According to a further preferred embodiment of the present invention,
the clutch link rod and the shift link rod are arranged so as to extend along a plane perpendicular to vehicle width direction of the straddled vehicle.

A link rod of a link mechanism, when transmitting a force, moves in the direction of extension of the link rod itself. In the straddled vehicle of (4), the clutch link rod and the shift link rod are arranged so as to extend along a plane perpendicular to the vehicle width direction. This can suppress movement and thus protrusion of the clutch link rod and the shift link rod in the vehicle width direction of the straddled vehicle, when the clutch and the transmission operate.

Here, a state in which the angle formed between a rod and a plane is less than 45 degrees can be regarded as a state in which "the rod extends along the plane."

According to a further preferred embodiment of the present invention,
the clutch is of an inner-push type, disposed rightward of center line of the straddled vehicle in vehicle width direction in a plan view of the straddled vehicle.

In the straddled vehicle of (5), the clutch of the inner-push type, which is disposed rightward of the center line, has its clutch operation cam disposed leftward of the center line. That is, the clutch operation cam, like the connection end of the shifting shaft, is disposed leftward of the center line. Thus, in a situation where the shift link rod is arranged so as to extend along the plane perpendicular to the vehicle width direction, the clutch link rod is also arranged so as to extend along the plane perpendicular to the vehicle width direction. This can further suppress movement and thus protrusion of the shift link rod in the vehicle width direction.

According to a further preferred embodiment of the present invention,
the shift/clutch shared actuator is disposed further in backward direction than a cylinder of the engine, and further in upward direction than the crank case.

According to said preferred embodiment, the straddled vehicle has a high degree of freedom in designing and manufacturing such that vehicles of different gear-shifting types can be designed and/or manufactured, and at the same time makes it possible that the shift/clutch shared actuator is concisely arranged with efficient use of a space that is produced due to the shape of the engine, even in a case of the electronic gear shifting type.

According to a further preferred embodiment of the present invention,
the engine includes a sprocket through which a driving force from the multi-speed transmission is outputted, and
the shifting shaft is disposed further upward than the sprocket in up-down direction of the straddled vehicle.

According to said preferred embodiment, when the shift/clutch shared actuator is arranged further in upward direction than the crank case, the shift link transmission mechanism can be arranged at a position where the shift link transmission mechanism does not overlap the sprocket, a chain, or a belt in a side view of the straddled vehicle. Accordingly, in the vehicle width direction of the straddled vehicle, the shift link transmission mechanism can be arranged concisely.

According to a further preferred embodiment of the present invention,
the clutch link transmission mechanism and the shift link transmission mechanism are configured such that the clutch operation cam rotates through a rotation angle that is not less than a rotation angle of the shifting shaft.

According to said preferred embodiment, the clutch operation cam rotates through an angle not less than the rotation angle of the shifting shaft. A rotation angle of the clutch operation cam for allowing the clutch to operate changes depending on the degree of wear and a tolerance of attachment of a plate provided within the clutch. Since the clutch operation cam rotates through an angle not less than the rotation angle of the shifting shaft, the angle through which the clutch operation cam rotates when the shifting shaft rotates is sufficient for allowing the clutch to operate.

The straddled vehicle is a vehicle having a saddle-type seat. The straddled vehicle is a vehicle configured to have a rider ride thereon astride the seat. The straddled vehicle has a power source. The straddled vehicle is not limited to a motorcycle of a scooter type, a moped type, an off-road type, or an on-road type, but includes a snowmobile, a watercraft, an all-terrain vehicle (ATV), and the like. The straddled vehicle may include at least one front wheel and at least one rear wheel. The straddled vehicle is not limited to a motorcycle, and may be a motor tricycle whose front wheel or rear wheel is composed of a pair of left and right wheels, or a four-wheeled motor vehicle whose front wheel and rear wheel are each composed of a pair of left and right wheels. The straddled vehicle may be configured to be capable of turning with a leaning posture in which the straddled vehicle leans toward the center of a curve.

The shift/clutch shared actuator is attached to the vehicle body frame, for example. Attachment of the shift/clutch shared actuator is not particularly limited, and for example, the shift/clutch shared actuator may be attached to a crank case.

The clutch is a centrifugal clutch, for example. The clutch is not particularly limited, and may be configured to have no centrifugal clutch function.

The electric actuator is controlled by a control device, for example. The control device has a function for controlling the electric actuator, and a function for controlling the engine, for example. The control device is not particularly limited, and may be configured to have the function for controlling the electric actuator without having the function for controlling the engine, for example.

The terminology as used herein is for defining particular embodiments only and is not intended to be limiting the invention. As stated herein, the term "and/or" includes any and all combinations of one or more of the associated listed items. As stated herein, the terms "including," "comprising," or "having," and variations thereof specify the presence of stated features, steps, operations, elements, components, and/or equivalents thereof, and can include one or more of steps, operations, elements, components, and/or their groups. As stated herein, the terms "attached," "connected," "engaged," and/or equivalents thereof are used in a broad sense, and include both direct and indirect attachment, connection, and engagement. Furthermore, the wordings "connected" and "engaged" are not limited to physical or mechanical connection or engagement, but may include direct or indirect electrical connection or engagement. Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the present invention and relevant art and should not be interpreted in an idealized or overly formal sense unless expressly so defined herein. It will be understood that the description of the present invention discloses multiple techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present invention as defined by the appended claims.

This Description is giving an explanation about a novel straddled vehicle. In the description given below, for the purposes of explanation, numerous specific details are set forth in order to provide a thorough understanding of the present invention. It will be apparent, however, that those skilled in the art may practice the present invention without these specific details. The description and drawings are to be considered as an exemplification of the present invention, and are not intended to limit the present invention to the specific embodiments illustrated by drawings or descriptions below. The scope of the invention is defined by the appended claims.

### Advantageous Effects of Invention

The present invention can provide a straddled vehicle that is small and has a high degree of freedom in designing and manufacturing such that vehicles of different gear-shifting types, such as a vehicle of an electronic gear shifting type in which the gear stage is switched by an actuator and a vehicle of a manual type in which the gear stage is switched by a rider's manipulation force, can be designed and/or manufactured so as to respond to rider's orientations.

### Brief Description of Drawings

[FIG. 1] A schematic side view showing a straddled vehicle according to an embodiment of the present invention
[FIG. 2] A schematic side view showing a power unit illustrated in FIG. 1
[FIG. 3] A developed cross-sectional view showing a cross-section along each axis in the power unit illustrated in FIG. 2
[FIG. 4] An enlarged cross-sectional view showing a clutch, a multi-speed transmission, a shift/clutch shared actuator, a clutch link transmission mechanism, and a shift link transmission mechanism illustrated in FIG. 2
[FIG. 5] A cross-sectional view showing a variation of the clutch link transmission mechanism illustrated in FIG. 4
[FIG. 6] A cross-sectional view showing a part of a further variation example of the clutch link transmission mechanism and the clutch illustrated in FIG. 3.

### Description of Embodiments

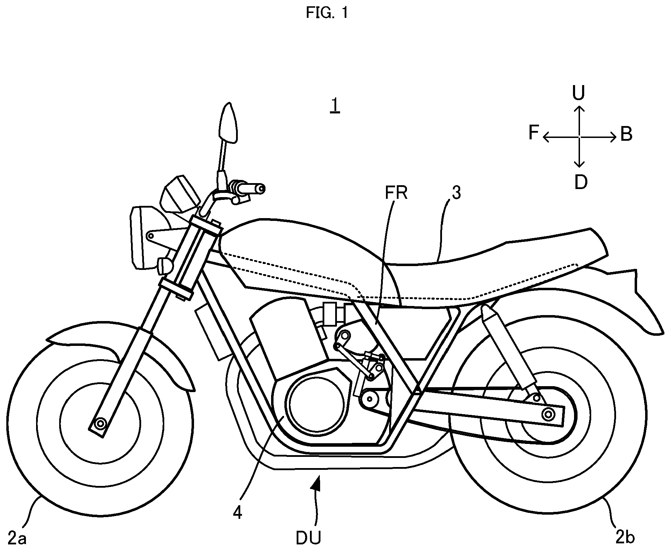

FIG. 1 is a schematic side view showing a straddled vehicle according to an embodiment of the present invention.

In the drawings of the present application, "F" indicates forward in traveling, and "B" indicates backward in traveling. In addition, "U" indicates upward and "D" indicates downward, in a state where the straddled vehicle is upright. Moreover, "L" indicates leftward and "R" indicates rightward, in a state of facing toward a traveling direction. The vehicle width direction including the leftward L and the rightward R will be denoted by LR.

A straddled vehicle 1 shown in FIG. 1 includes two wheels 2a, 2b, a seat 3, a drive unit DU, and a vehicle body frame FR.

The seat 3 is of a saddle type. A rider of the straddled vehicle 1 sits astride on the seat 3. The rear wheel 2b functions as a driving wheel. The drive unit DU includes an engine 4. The drive unit DU supplies a driving force to the wheel 2b as the driving wheel. As the wheel 2b receiving the driving force rotates, the straddled vehicle 1 travels. The vehicle body frame FR supports the entire vehicle body of the straddled vehicle 1. The engine 4 of the drive unit DU is attached to the vehicle body frame FR.

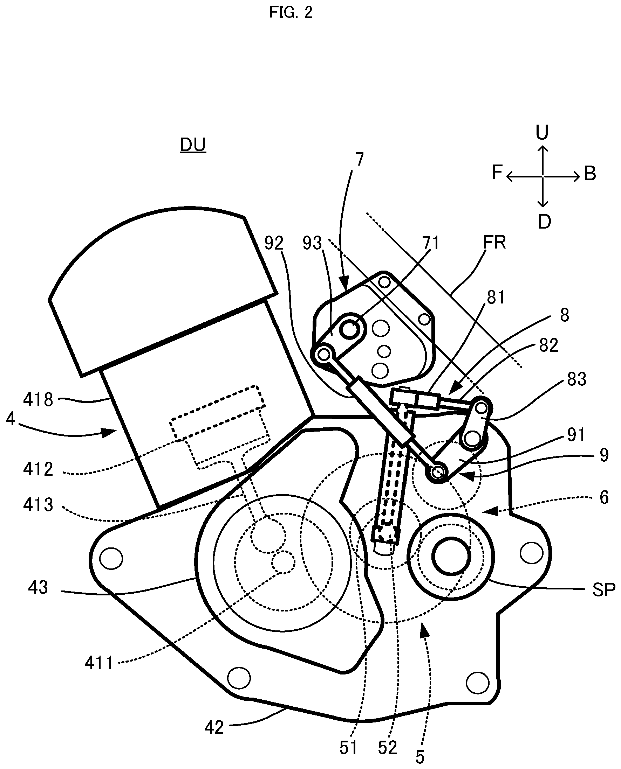

FIG. 2 is a schematic side view showing a power unit illustrated in FIG. 1.

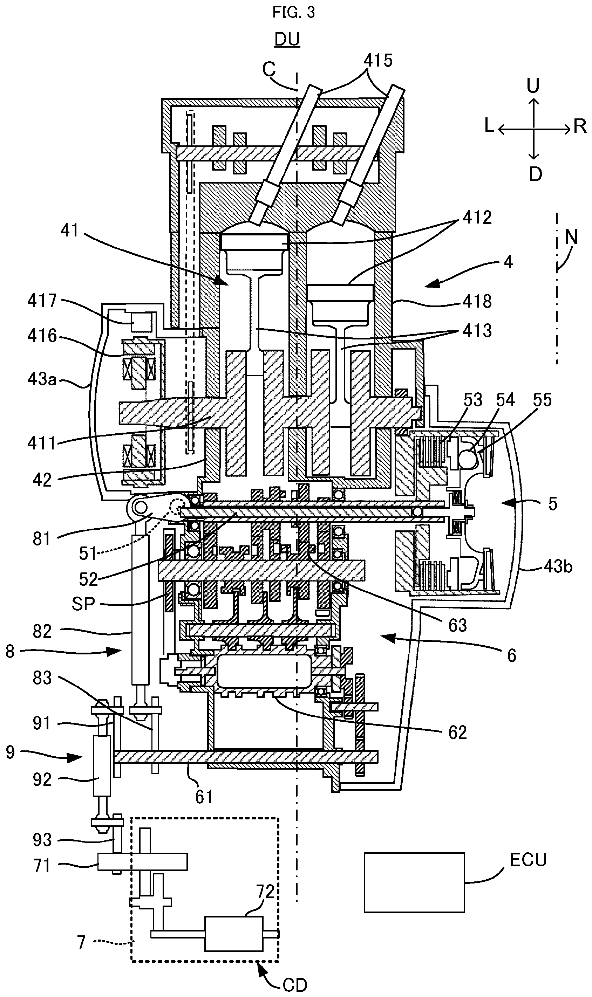

FIG. 3 is a developed cross-sectional view showing a cross-section along each axis in the power unit illustrated in FIG. 2. The cross-section shown in FIG. 3 is not on a single plane, but on a bent surface that is along each axis and the center line in the power unit. Each part is illustrated in a developed manner while avoiding overlapped indications, for the purpose of easy understanding of a drive structure. The relative positions of the parts are, therefore, different from the positions shown in FIG. 2.

The drive unit DU shown in FIG. 2 and FIG. 3 includes the engine 4, a clutch 5, a multi-speed transmission 6, a shift/clutch shared actuator 7, a clutch link transmission mechanism 8, and a shift link transmission mechanism 9. That is, the straddled vehicle 1 shown in FIG. 1 includes the engine 4, the clutch 5, the multi-speed transmission 6, the shift/clutch shared actuator 7, the clutch link transmission mechanism 8, and the shift link transmission mechanism 9.

The engine 4 has a power mechanism 41, a crank case 42, and engine covers 43a, 43b. The power mechanism 41 generates power for driving the straddled vehicle 1. The power mechanism 41 includes a crankshaft 411. For example, the power mechanism 41 has not only the crankshaft 411 but also a mechanism that generates power for driving the straddled vehicle 1, the mechanism being constituted by pistons 412, connecting rods 413, spark plugs 415, a generator 416, and a crank position detection device 417. The engine 4 also has a cylinder 418 that accommodates the pistons 412. The cylinder 418 is connected to the crank case 42.

The crank case 42 supports the crankshaft 411. The crank case 42 may support mechanisms and parts other than the crankshaft 411. The crank case 42 supports the clutch 5 and the multi-speed transmission 6. That is, the clutch 5 and the multi-speed transmission 6 are attached to the engine 4.

The engine covers 43a, 43b are attached to the crank case 42. The engine covers 43a, 43b accommodate a part of the power mechanism 41. The engine cover 43a accommodates a part of the power mechanism 41 so as to avoid ingress of water and sand from the outside. The engine cover 43a covers a part of the power mechanism 41 in a watertight manner.

The engine cover 43a covers the generator 416. The generator 416 is attached to the crankshaft 411, and is disposed outside the crank case 42. The engine cover 43a also covers the crank position detection device 417. The crank position detection device 417 magnetically detects a rotation position of a rotor of the generator 416, and thus detects a rotation position of the crankshaft 411. The spark plug 415 ignites a fuel-air mixture based on a position that the crank position detection device 417 has detected by using electric power generated by the generator 416. This brings the engine 4 into a combustion operation to generate power. Accordingly, the generator 416 and the crank position detection device 417 are included in the power mechanism 41, which is for generating power.

The engine cover 43b covers the clutch 5. The clutch 5 is connected to the crankshaft 411, and is disposed outside the crank case 42. Power of the crankshaft 411, which is transmitted by the clutch 5, is transmitted to the multi-speed transmission 6, and then to the wheel 2b. Accordingly, the clutch 5 is included in the power mechanism 41, which is for generating power.

In a plan view of the straddled vehicle 1, the clutch 5 is disposed rightward R of center line C of the straddled vehicle 1 in the vehicle width direction LR. The clutch 5 is of an inner push type.

The clutch 5 has a clutch operation cam 51. The clutch operation cam 51 is disposed leftward of the center line C.

The clutch 5 disconnects and connects power transmission in accordance with rotation of the clutch operation cam 51. More specifically, the clutch 5 has a push rod 52, plural clutch plates 53, a weight member 54, and a cam member 55.

The clutch 5 is a centrifugal clutch. The weight member 54 is in cam engagement with the cam member 55. The weight member 54 rotates in coordination with the crankshaft 411. While the crankshaft 411 stops rotation or is rotating at a speed equal to or less than an idling speed, the weight member 54 of the clutch 5 is positioned closer to the rotation center. **In** such a condition, the clutch 5 is in a disconnected state in which power transmission is disconnected. When the rotation speed of the crankshaft 411 exceeds the idling speed, the weight member 54 moves outward. The cam member 55 and the weight member 54 press the plural clutch plates 53. This brings the clutch 5 into a power connected state.

As the clutch operation cam 51 receives an actuation force and rotates while the clutch 5 is in the connected state, the push rod 52, which is in engagement with the clutch operation cam 51, moves. The push rod 52 moves so as to reduce a pressing force of the clutch plates 53. This brings the clutch 5 into a half-clutch state or the disconnected state.

The multi-speed transmission 6 has plural gear stages. The multi-speed transmission 6 has a shifting shaft 61. The multi-speed transmission 6 switches the gear stages in accordance with rotation of the shifting shaft 61. The multi-speed transmission 6 is provided with a sprocket SP. The multi-speed transmission 6 outputs power through the sprocket SP. Attached to the sprocket SP is a chain or a belt. The power is transmitted to the wheel 2b (see FIG. 1) via the chain or the belt. As the gear stage is switched, the gear ratio of rotation to be transmitted to the wheel 2b is switched.

In more detail, the multi-speed transmission 6 includes a shift cam 62 and a gear group 63. The shift cam 62 rotates in accordance with rotation of the shifting shaft 61. As the shift cam 62 rotates, a gear combination in the gear group 63 that are in cam engagement with the shift cam 62 is switched. Consequently, the gear stage is switched.

The shift/clutch shared actuator 7 is attached to the vehicle body frame FR. The shift/clutch shared actuator 7 has an output rotation shaft 71 and an electric actuator 72. The output rotation shaft 71 outputs a rotational force that is produced by the electric actuator 72. The shift/clutch shared actuator 7 outputs through the output rotation shaft 71 such a rotational force as to drive operations of the clutch 5 and the multi-speed transmission 6.

More specifically, the electric actuator 72 is controlled by a control device ECU. Under control of the control device ECU, the electric actuator 72 operates, so that the gear stage is switched in the multi-speed transmission 6 while the state of the clutch 5 is changed from the connected state to the half-clutch state or to the disconnected state.

As the control device ECU, a configuration having a function for controlling an output of the engine 4 may be adoptable. For example, the control device ECU may carry out a quick shift, which is for facilitating switching of the gear combination in the gear group 63, by controlling an output of the engine 4 so as to change it temporarily, when switching the gear stage in the multi-speed transmission 6. In such a case, switching of the gear stage can be made easily even if the clutch 5 is not in the disconnected state. It however should be noted that the clutch 5 in the half-clutch state can relieve a shock at a speed change caused by switching of the gear stage.

As the control device ECU, for example, a configuration that does not control an output of the engine 4 may also be adoptable. For example, a configuration is adoptable that brings the clutch 5 into the disconnected state without changing an output of the engine 4 when switching the gear stage in the multi-speed transmission 6. This makes switching of the gear stage easy even though the quick shift is not carried out.

The clutch link transmission mechanism 8 has a first clutch link arm 81, a clutch link rod 82, and a second clutch link arm 83. The first clutch link arm 81 is fixed to the clutch operation cam 51. The clutch link rod 82 is coupled to the first clutch link arm 81. The clutch link rod 82 has a rod main body, and two coupling portions that are screw-engaged with the opposite sides of the rod main body. The two coupling portions are rotatably coupled to the first clutch link arm 81 and the second clutch link arm 83, respectively. The clutch link rod 82, by changing the length of its screw-engaged portion, can adjust its entire length. The second clutch link arm 83 is coupled to the clutch link rod 82. The clutch link transmission mechanism 8 transmits a rotational force of the output rotation shaft 71 of the shift/clutch shared actuator 7 to the clutch operation cam 51. The clutch link rod 82 is arranged so as to extend along a plane N perpendicular to the vehicle width direction LR. The rotation axis line of the first clutch link arm 81, which means the rotation axis line of the clutch operation cam 51, is not in parallel but geometrically in a skewed relationship with a rotation shaft of the second clutch link arm 83. The rotation axis line of the clutch operation cam 51 and the rotation shaft of the second clutch link arm 83 are in such a relationship that they become parallel if one of them is substantially rotated by 90 degrees. Thanks to the clutch link transmission mechanism 8 having the clutch link rod 82, the direction of the rotation axis line can be changed easily and concisely.

The shift link transmission mechanism 9 has a first shift link arm 91, a shift link rod 92, and a second shift link arm 93. The first shift link arm 91 is fixed to the shifting shaft 61. The shift link rod 92 is coupled to the first shift link arm 91. The shift link rod 92 has a rod main body, and two coupling portions that are screw-engaged with the opposite sides of the rod main body. The two coupling portions are rotatably coupled to the first shift link arm 91 and the second shift link arm 93, respectively. The shift link rod 92, by changing the length of its screw-engaged portion, can adjust its entire length. The second shift link arm 93 is coupled to the shift link rod 92. The second shift link arm 93 is fixed to the shifting shaft 61. The shift link rod 92 is arranged so as to extend along the plane N perpendicular to the vehicle width direction LR.

The shift link transmission mechanism 9 transmits a rotational force of the output rotation shaft 71 of the shift/clutch shared actuator 7 to the shifting shaft 61. As the second shift link arm 93 is rotated by the rotational force of the output rotation shaft 71, the shift link rod 92 moves in the longitudinal direction of the shift link rod 92. As a result, the first shift link arm 91 rotates together with the shifting shaft 61.

In this embodiment, the second clutch link arm 83 is fixed to the shifting shaft 61. Thus, when the shifting shaft 61 rotates together with the first shift link arm 91, the second clutch link arm 83 rotates, too. The clutch link rod 82 moves in the longitudinal direction of the clutch link rod 82. As a result, the first clutch link arm 81 rotates together with the clutch operation cam 51. A force for operating the clutch operation cam 51 is transmitted via the shifting shaft 61.

The first shift link arm 91 and the second clutch link arm 83, which are fixed to the shifting shaft 61, rotate together.

The first shift link arm 91 and the second clutch link arm 83 may, for example, be formed as a single member. That is, a single member may serve as both the first shift link arm 91 and the second clutch link arm 83.

Both the clutch link transmission mechanism 8 and the shift link transmission mechanism 9 are disposed outside the crank case 42 and outside the engine covers 43a, 43b. That is, both the clutch link transmission mechanism 8 and the shift link transmission mechanism 9 are exposed to the outside of the straddled vehicle 1.

Here, a configuration may be adoptable in which, for example, a rod-shaped or plate-shaped guard member for contact protection is disposed further in the outward direction than the clutch link transmission mechanism 8 and the shift link transmission mechanism 9. In such a case as well, the clutch link transmission mechanism 8 and the shift link transmission mechanism 9, unlike the generator 416, are not sealed, and are arranged so as to be in contact with the outside air.

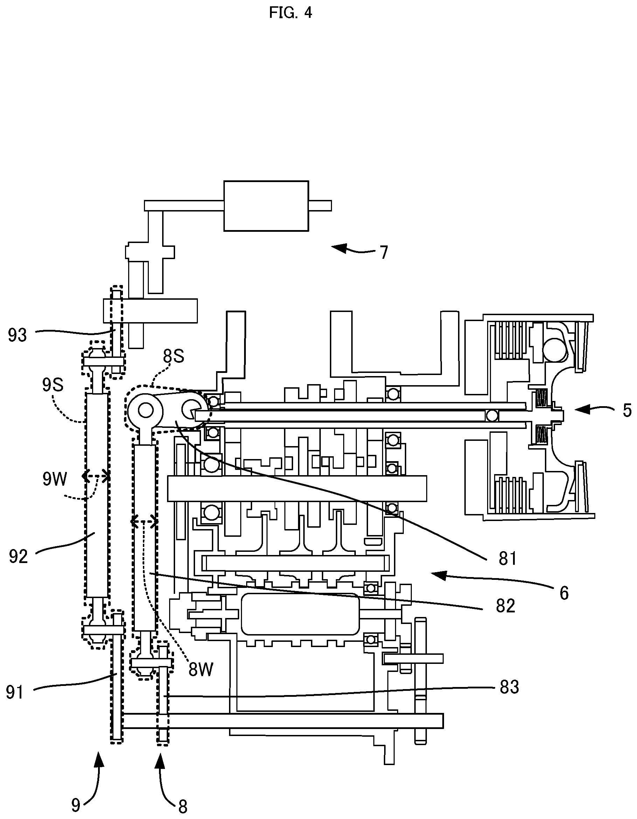

FIG. 4 is an enlarged cross-sectional view showing the clutch, the multi-speed transmission, the shift/clutch shared actuator, the clutch link transmission mechanism, and the shift link transmission mechanism illustrated in FIG. 2. Illustration of the engine is omitted, and the shift/clutch shared actuator is shown at a location near its position illustrated in FIG. 2. In FIG. 4, hatching is omitted for the purpose of easier understanding of the drive structure.

The clutch link rod 82 of the clutch link transmission mechanism 8 moves in the direction of extension of the clutch link rod 82, for transmitting a force. The clutch link rod 82 can, therefore, be arranged in a space 8S, which is obtained by adding a space for movement of the clutch link rod 82 to a space occupied by the clutch link rod 82 itself. The space added for movement of the clutch link rod 82 is irrelevant to a distance over which the force is transmitted, unlike in a case of gear engagement or direct engagement of arms, for example. Thus, of the space 8S, which needs to be reserved for movement of the clutch link rod 82, the width dimension 8W perpendicular to the moving direction is irrelevant to the distance over which the clutch link transmission mechanism 8 transmits the force, unlike in a case of gear engagement or direct engagement of arms, for example. The first clutch link arm 81 and the second clutch link arm 83, which are coupled to the clutch link rod 82, are also irrelevant to the distance over which the clutch link transmission mechanism 8 transmits the force, and each of them can be arranged in a space of rotation whose radius is from the center of rotation to a portion coupled to the clutch link rod 82. Accordingly, the clutch link transmission mechanism 8 can be concisely arranged irrespective of the distance over which the force is transmitted.

The shift link rod 92 of the shift link transmission mechanism 9 moves in the direction of extension of the shift link rod 92, for transmitting a force. The shift link rod 92 can, therefore, be arranged in a space 9S, which is obtained by adding a space for movement of the shift link rod 92 to a space occupied by the shift link rod 92 itself. The space added for movement of the shift link rod 92 is irrelevant to a distance over which the force is transmitted, unlike in a case of gear engagement or direct engagement of arms, for example. Thus, of the space that needs to be reserved for movement of the shift link rod 92, the width dimension 9W perpendicular to the moving direction is irrelevant to the distance over which the force is transmitted, unlike in a case of gear engagement or direct engagement of arms, for example. The first shift link arm 91 and the second shift link arm 93, which are coupled to the shift link rod 92, are also irrelevant to the distance over which the force is transmitted, and each of them can be arranged in a space of rotation whose radius is from the center of rotation to a portion coupled to the shift link rod 92. Accordingly, the shift link transmission mechanism 9 can be concisely arranged irrespective of the distance over which the force is transmitted.

The link rods 82, 92 themselves do not have to be supported by a casing. As for each of the first clutch link arm 81, the second clutch link arm 83, the first shift link arm 91, and the second shift link arm 93, too, the distance from the fulcrum to the point of action is the distance from the center of rotation to the portion coupled to the link rod 82, 92, and a load acting on the fulcrum is irrelevant to the length of the link rod 82, 92. The load acting on the center of rotation, or the fulcrum, can be suppressed, because the distance from the center of rotation of the link arm 81, 83, 91, 93 to the portion coupled to the link rod 82, 92, which is the point of action, can be suppressed irrespective of the distance over which the force is transmitted. This makes it possible to transmit the force without having the opposite ends of the rotation shaft of the link arm 81, 83, 91, 93 supported by the crank case 42 or the engine covers 43a, 43b, for example. In addition, meshing of gears, and a rubbing and moving portion can be excluded from the transmission mechanism. This makes an obstacle such as sand and dust less influential. Accordingly, even though both the clutch link transmission mechanism 8 and the shift link transmission mechanism 9 are disposed outside the crank case 42 and outside the engine covers 43a, 43b, the transmitting function is less influenced.

For example, in a case where a straddled vehicle 1 of an electronic gear shifting type and a straddled vehicle 1 of a manual type are designed and/or manufactured as the straddled vehicles 1, adoption of the link transmission mechanisms according to this embodiment makes it possible to obtain the electronic gear shifting type by adding the shift/clutch shared actuator 7 to the vehicle of the manual type, while allowing both the clutch link transmission mechanism 8 and the shift link transmission mechanism 9 to be disposed outside the crank case 42 and outside the engine covers 43a, 43b. In this case, it is possible to design and/or manufacture the straddled vehicle of the electronic gear shifting type while making use of a basic structure of the crank case and the engine covers of the manual type.

Accordingly, the straddled vehicle 1 can be achieved that is small and has a high degree of freedom in designing and manufacturing such that vehicles of different gear-shifting types, such as a straddled vehicle of an electronic gear shifting type in which the gear stage is switched by an actuator and a straddled vehicle of a manual type in which the gear stage is switched by a rider's manipulation force, can be designed and/or manufactured so as to respond to rider's orientations.

The shift/clutch shared actuator 7 of this embodiment is attached to the vehicle body frame FR. Since the shift/clutch shared actuator 7 is attached to the vehicle body frame FR, it is not necessary that, for example, an attachment portion for attachment of the actuator is formed in the crank case 42 exclusively for the electronic gear shifting type.

The distance from the clutch operation cam 51 of the clutch 5 or from the shifting shaft 61 of the multi-speed transmission 6 to the output rotation shaft 71 of the shift/clutch shared actuator 7 is influenced by an accumulation of at least the following tolerances:
a tolerance of attachment of the shift/clutch shared actuator 7 to the vehicle body frame FR;
a tolerance of attachment of the engine 4 to the vehicle body frame FR; and
a tolerance of attachment of the clutch 5 and the multi-speed transmission 6 to the engine 4.

Therefore, it is likely that each individual straddled vehicle 1 has a large tolerance in the distance from the clutch operation cam 51 or from the shifting shaft 61 to the output rotation shaft 71.

In this embodiment, the clutch operation cam 51 and the output rotation shaft 71 are coupled through the clutch link transmission mechanism 8. The shifting shaft 61 and the output rotation shaft 71 are coupled through the shift link transmission mechanism 9. The distance of transmission in the clutch link transmission mechanism 8 can be adjusted more flexibly by a length adjustment mechanism of the clutch link rod 82, for example, as compared to transmission via a gear for example. The distance of transmission in the shift link transmission mechanism 9 can also be adjusted more flexibly by a length adjustment mechanism of the shift link rod 92, for example, as compared to transmission via a gear for example. Accordingly, a high degree of freedom, including the adjustment, can be obtained in designing and/or manufacturing the vehicle of the electronic gear shifting type.

In this embodiment, the second shift link arm 93 is fixed to the output rotation shaft 71 of the shift/clutch shared actuator 7, and the second clutch link arm 83 is fixed to the shifting shaft 61.

Rotation of the output rotation shaft 71 of the shift/clutch shared actuator 7 is transmitted to the shifting shaft 61 via the shift link transmission mechanism 9. Rotation of the shifting shaft 61 is then transmitted to the clutch operation cam 51 via the clutch link transmission mechanism 8. This embodiment suppresses concentrated arrangement of the link rods in the output rotation shaft 71 of the shift/clutch shared actuator 7. Accordingly, the shift link transmission mechanism 9 and the clutch link transmission mechanism 8 can be concisely arranged near the shift/clutch shared actuator 7.

In this embodiment, the clutch link rod 82 and the shift link rod 92 are arranged so as to extend along the plane N perpendicular to the vehicle width direction LR of the straddled vehicle 1.

The clutch link rod 82 and the shift link rod 92 are arranged so as to extend along the plane N (see FIG. 3), which is perpendicular to the vehicle width direction LR. This can suppress movement and thus protrusion of the clutch link rod 82 and the shift link rod 92 in the vehicle width direction LR of the straddled vehicle 1, when the clutch 5 and the multi-speed transmission 6 operate.

The clutch 5 is of an inner-push type disposed rightward R of the center line C, and the clutch operation cam 51 of the clutch 5 is disposed leftward L of the center line C. That is, the clutch operation cam 51, like the connection end of the shifting shaft 61, is disposed leftward L of the center line C. Thus, in a situation where the shift link rod 92 is arranged so as to extend along the plane N perpendicular to the vehicle width direction, the clutch link rod 82 is also arranged so as to extend along the plane N perpendicular to the vehicle width direction LR. This can further suppress movement and thus protrusion of the shift link rod 92 in the vehicle width direction LR.

As shown in FIG. 2, the shift/clutch shared actuator 7 is disposed further in the backward direction B than the cylinder 418 of the engine 4, and further in the upward direction U than the crank case 42.

With this configuration, the shift/clutch shared actuator 7 can be disposed with efficient use of a space that is produced due to the shape of the engine 4 in the straddled vehicle 1 of the electronic gear shifting type. Accordingly, the shift/clutch shared actuator 7 can be arranged concisely.

The engine 4 includes the sprocket SP, through which a driving force is outputted from the multi-speed transmission 6. The shifting shaft 61 is disposed further upward than the sprocket SP in the up-down direction UD.

In this configuration, the shift link transmission mechanism 9 is arranged at a position where the shift link transmission mechanism 9 does not overlap the sprocket SP, the chain, or the belt in a side view of the straddled vehicle 1. Accordingly, in the vehicle width direction LR, the shift link transmission mechanism 9 can be arranged concisely in the straddled vehicle 1.

In this embodiment, the clutch link transmission mechanism 8 and the shift link transmission mechanism 9 are configured such that the clutch operation cam 51 rotates through a rotation angle that is not less than the rotation angle of the shifting shaft 61.

In this configuration, the clutch operation cam 51 rotates through an angle not less than the rotation angle of the shifting shaft 61. A rotation angle of the clutch operation cam 51 for allowing the clutch 5 to operate changes depending on the degree of wear and a tolerance of attachment of the clutch plates 53 provided within the clutch 5. Since the clutch operation cam 51 rotates through an angle not less than the rotation angle of the shifting shaft 61, the angle through which the clutch operation cam 51 rotates when the shifting shaft 61 rotates is sufficient for allowing the clutch 5 to operate.

Although a cam has been explained as a mechanism for converting the rotation of the first clutch link arm 81 into movement of the push rod 52, a rack and pinion may also be adopted as a conversion mechanism, for example.

### [Variation]

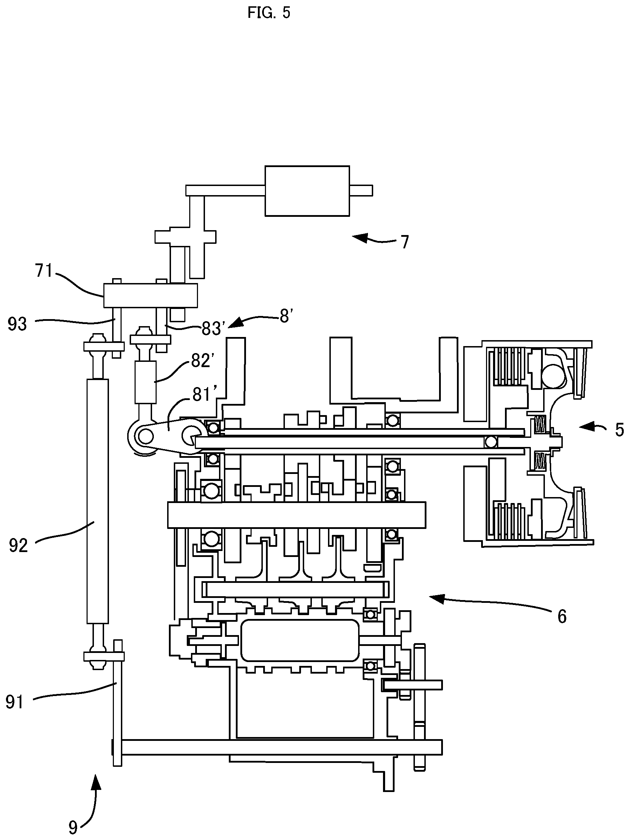

FIG. 5 is a cross-sectional view showing a variation of the clutch link transmission mechanism 8 illustrated in FIG. 4.

A clutch link transmission mechanism 8' shown in FIG. 5 has a first clutch link arm 81', a clutch link rod 82', and a second clutch link arm 83'. The second clutch link arm 83' is fixed to an output rotation shaft 71 of a shift/clutch shared actuator 7.

In the variation shown in FIG. 5, too, the clutch link transmission mechanism 8' transmits a rotational force of the output rotation shaft 71 of the shift/clutch shared actuator 7 to a clutch operation cam 51.

A shift link transmission mechanism 9 transmits a rotational force of the output rotation shaft 71 of the shift/clutch shared actuator 7 to a shifting shaft 61. A force for operating the clutch operation cam 51 is transmitted without going through the shifting shaft 61.

The second shift link arm 93 and the second clutch link arm 83', which are fixed to the output rotation shaft 71, rotate together.

The second shift link arm 93 and the second clutch link arm 83' may, for example, be formed as a single member. That is, a single member may serve as both the second shift link arm 93 and the second clutch link arm 83'.

### [Second Variation]

In the embodiment and modification example described above, the centrifugal clutch 5 changes from a connected state to a half-clutch state by the movement of the operation force transmission member 21 during either shift-up or shift-down in the multi-speed transmission 6. However, the type of shift for which the centrifugal clutch 5 operates is not particularly limited, and may be implemented during both shift-up and shift-down, for example.

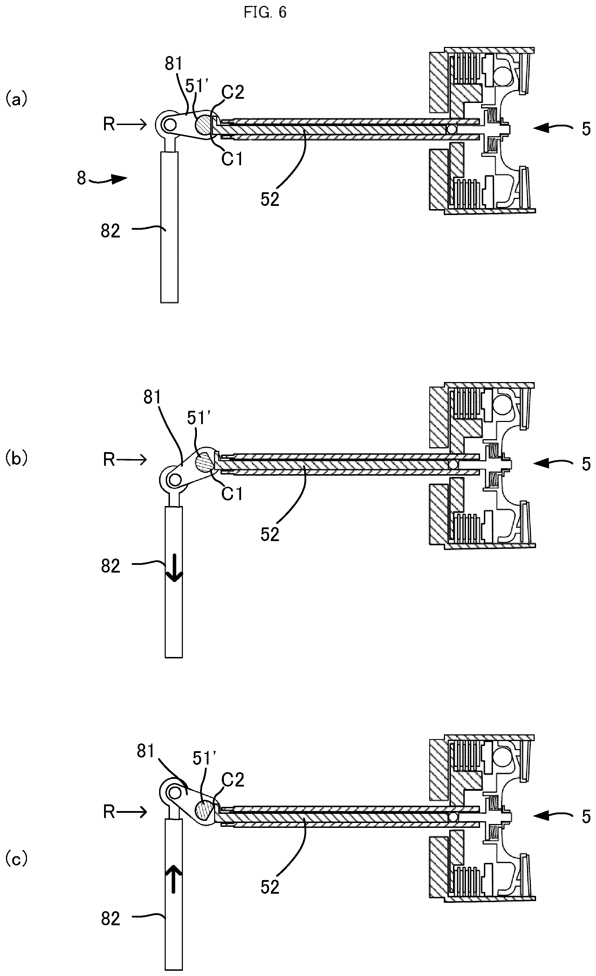

FIG. 6 is a cross-sectional view showing a part of a further variation example of the clutch link transmission mechanism and the clutch illustrated in FIG. 3.

In the clutch link transmission mechanism 8 of this modification example, the shape of the clutch operation cam 51' differs from the shape shown in FIG. 3. The clutch operation cam 51' is a portion that pushes the push rod 52 in the release direction R by rotating integrally with the first clutch link arm 81. More specifically, the cross-sectional shape of the clutch operation cam 51' differs from the shape shown in FIG. 3. Additionally, in this modification example, the shape of the portion of the operation member 31 that contacts the clutch operation cam 51' differs from the shape shown in FIG. 3, corresponding to the shape of the clutch operation cam 51'. Other parts in this modification example are common with those shown in FIG. 3. Therefore, common functional parts between this modification example and the elements shown in FIG. 3 are assigned the same reference numerals, and explanations are omitted.

The first clutch link arm 81 shown in FIG. 6 rotates around the clutch operation cam 51' as the clutch link rod 82 moves. The first clutch link arm 81 rotates in opposite directions during shift-up and shift-down. Part (a) of FIG. 6 shows the first clutch link arm 81 in a neutral region state, which is neither during shift-up nor shift-down.

The clutch operation cam 51' has a first cam C1 that pushes the operation member 31 when rotated clockwise from the neutral region, and a second cam C2 that pushes the push rod 52 when rotated counterclockwise from the neutral region.

Part (b) of FIG. 6 shows the first clutch link arm 81 during shift-up while driving. Part (c) of FIG. 6 shows the first clutch link arm 81 during shift-down while driving.

During shift-up shown in part (b), the clutch link rod 82 connected to the first clutch link arm 81 moves in the direction opposite to the end connected to the first clutch link arm 81 (downward in the figure). The first clutch link arm 81 rotates counterclockwise from the neutral region. The first cam C1 of the clutch operation cam 51' pushes the operation member 31 in the release direction R. As a result, the centrifugal clutch 10 changes to a half-clutch state. During shift-down shown in part (c), the clutch link rod 82 connected to the first clutch link arm 81 moves in the direction of the end connected to the first clutch link arm 81 (upward in the figure). The first clutch link arm 81 rotates clockwise from the neutral region. The second cam C2 of the clutch operation cam 51' pushes the push rod 52 in the release direction R. The centrifugal clutch 10 changes to a half-clutch state.

According to this modification example, it is possible to achieve a change from the connected state to the half-clutch state by the movement of the operation force transmission member 21 during both shift-up and shift-down in the multi-stage transmission MT.

### Reference Signs List

- 1: : straddled vehicle
- 4: : engine
- 5: : clutch
- 6: : multi-speed transmission
- 7: : shift/clutch shared actuator
- 8, 8': : clutch link transmission mechanism
- 9: : shift link transmission mechanism
- 41: : power mechanism
- 42: : crank case
- 43a, 43b: : engine cover
- 51: : clutch operation cam
- 61: : shifting shaft
- 71: : output rotation shaft
- 72: : electric actuator
- 81, 81': : first clutch link arm
- 82, 82': : clutch link rod
- 83, 83': : second clutch link arm
- 91: : first shift link arm
- 92: : shift link rod
- 93: : second shift link arm
- 411: : crankshaft
- 418: : cylinder
- FR: : vehicle body frame

## Claims

1. A straddled vehicle (1) comprising:
an engine (4) having a power mechanism (41), a crank case (42), and an engine cover (43a, 43b), the power mechanism (41) including a crankshaft (411) and configured to generate power for driving the straddled vehicle (1), the crank case (42) supporting the crankshaft (411), the engine cover (43a, 43b) being attached to the crank case (42) and accommodating a part of the power mechanism (41);
a clutch (5), supported by the crank case (42) and having a clutch operation cam (51), the clutch (5) being configured to disconnect and connect transmission of the power in accordance with rotation of the clutch operation cam (51);
a multi-speed transmission (6), supported by the crank case (42) and having a shifting shaft (61), the multi-speed transmission (6) being configured to switch a gear stage in accordance with rotation of the shifting shaft (61);
a shift/clutch shared actuator (7) having an electric actuator (72) and an output rotation shaft (71), the output rotation shaft (71) being configured to output a rotational force that is produced by the electric actuator (72), the shift/clutch shared actuator (7) being configured to output through the output rotation shaft (71) such a rotational force so as to drive operations of the clutch (5) and the multi-speed transmission (6);
a clutch link transmission mechanism (8, 8') having a first clutch link arm (81, 81'), a clutch link rod (82, 82'), and a second clutch link arm (83, 83'), the first clutch link arm (81, 81') being fixed to the clutch operation cam (51), the clutch link rod (82, 82') being coupled to the first clutch link arm (81, 81'), the second clutch link arm (83, 83') being coupled to the clutch link rod (82, 82'), the clutch link transmission mechanism (8, 8') being configured to transmit a rotational force of the output rotation shaft (71) of the shift/clutch shared actuator (7) to the clutch operation cam (51); and
a shift link transmission mechanism (9) having a first shift link arm (91), a shift link rod (92), and a second shift link arm (93), the first shift link arm (91) being fixed to the shifting shaft (61), the shift link rod (92) being coupled to the first shift link arm (91), the second shift link arm (93) being coupled to the shift link rod (92), the shift link transmission mechanism (9) being configured to transmit a rotational force of the output rotation shaft (71) of the shift/clutch shared actuator (7) to the shifting shaft (61),
both the clutch link transmission mechanism (8, 8') and the shift link transmission mechanism (9) being disposed outside the crank case (42) and outside the engine cover (43a, 43b).

2. The straddled vehicle (1) according to claim 1,
further comprising a vehicle body frame (FR) to which the engine (4) is attached, wherein
the clutch (5) and the multi-speed transmission (6) are attached to the engine (4), and
the shift/clutch shared actuator (7) is attached to the vehicle body frame (FR).

3. The straddled vehicle (1) according to claim 1 or 2, wherein
the second shift link arm (93) is fixed to the output rotation shaft (71) of the shift/clutch shared actuator (7), and the second clutch link arm (83) is fixed to the shifting shaft (61).

4. The straddled vehicle (1) according to any one of claims 1 to 3, wherein
the clutch link rod (82, 82') and the shift link rod (92) are arranged so as to extend along a plane perpendicular to vehicle width direction of the straddled vehicle.

5. The straddled vehicle (1) according to any one of claims 1 to 4, wherein
the clutch (5) is of an inner-push type, disposed rightward of a center line of the straddled vehicle (1) in vehicle width direction in a plan view of the straddled vehicle (1).

6. The straddled vehicle (1) according to any one of claims 1 to 5, wherein
the shift/clutch shared actuator (7) is disposed further in backward direction than a cylinder (418) of the engine (4), and further in upward direction than the crank case (42).

7. The straddled vehicle (1) according to any one of claims 1 to 6, wherein
the engine (4) includes a sprocket (SP) through which a driving force from the multi-speed transmission (6) is outputted, and
the shifting shaft (61) is disposed further upward than the sprocket (SP) in up-down direction of the straddled vehicle (1).

8. The straddled vehicle (1) according to any one of claims 1 to 7, wherein
the clutch link transmission mechanism (8, 8') and the shift link transmission mechanism (9) are configured such that the clutch operation cam (51) rotates through a rotation angle that is not less than a rotation angle of the shifting shaft (61).

## Patentansprüche

1. Ein Spreizsitzfahrzeug (1), das folgende Merkmale aufweist:
einen Motor (4), der einen Leistungsmechanismus (41), ein Kurbelgehäuse (42) und eine Motorabdeckung (43a, 43b) aufweist, wobei der Leistungsmechanismus (41) eine Kurbelwelle (411) umfasst und dazu konfiguriert ist, Leistung zum Antreiben des Spreizsitzfahrzeugs (1) zu erzeugen, wobei das Kurbelgehäuse (42) die Kurbelwelle (411) trägt, wobei die Motorabdeckung (43a, 43b) an dem Kurbelgehäuse (42) angebracht ist und einen Teil des Leistungsmechanismus (41) aufnimmt;
eine Kupplung (5), die von dem Kurbelgehäuse (42) getragen wird und einen Kupplungsbetätigungsnocken (51) aufweist, wobei die Kupplung (5) dazu konfiguriert ist, eine Übertragung der Leistung gemäß einer Drehung des Kupplungsbetätigungsnockens (51) zu trennen und herzustellen;
ein Mehrganggetriebe (6), das von dem Kurbelgehäuse (42) getragen wird und eine Schaltwelle (61) aufweist, wobei das Mehrganggetriebe (6) dazu konfiguriert ist, eine Gangstufe gemäß einer Drehung der Schaltwelle (61) zu schalten;
einen gemeinsamen Schalt-/Kupplungsaktuator (7) mit einem elektrischen Aktuator (72) und einer Abtriebsdrehwelle (71), wobei die Abtriebsdrehwelle (71) dazu konfiguriert ist, eine Drehkraft auszugeben, die von dem elektrischen Aktuator (72) erzeugt wird, wobei der gemeinsame Schalt-/Kupplungsaktuator (7) dazu konfiguriert ist, über die Abtriebsdrehwelle (71) eine derartige Drehkraft auszugeben, um die Betätigung der Kupplung (5) und des Mehrganggetriebes (6) anzutreiben;
einen Kupplungsverbindungsgetriebemechanismus (8, 8') mit einem ersten Kupplungsverbindungsarm (81, 81'), einer Kupplungsverbindungsstange (82, 82') und einem zweiten Kupplungsverbindungsarm (83, 83'), wobei der erste Kupplungsverbindungsarm (81, 81') an dem Kupplungsbetätigungsnocken (51) befestigt ist, wobei die Kupplungsverbindungsstange (82, 82') an den ersten Kupplungsverbindungsarm (81, 81') gekoppelt ist, wobei der zweite Kupplungsverbindungsarm (83, 83') an die Kupplungsverbindungsstange (82, 82') gekoppelt ist, wobei der Kupplungsverbindungsgetriebemechanismus (8, 8') dazu konfiguriert ist, eine Drehkraft der Abtriebsdrehwelle (71) des gemeinsamen Schalt-/Kupplungsaktuators (7) auf den Kupplungsbetätigungsnocken (51) zu übertragen; und
einen Schaltverbindungsgetriebemechanismus (9) mit einem ersten Schaltverbindungsarm (91), einer Schaltverbindungsstange (92) und einem zweiten Schaltverbindungsarm (93), wobei der erste Schaltverbindungsarm (91) an der Schaltwelle (61) befestigt ist, wobei die Schaltverbindungsstange (92) an den ersten Schaltverbindungsarm (91) gekoppelt ist, wobei der zweite Schaltverbindungsarm (93) an die Schaltverbindungsstange (92) gekoppelt ist, wobei der Schaltverbindungsgetriebemechanismus (9) dazu konfiguriert ist, eine Drehkraft der Abtriebsdrehwelle (71) des gemeinsamen Schalt-/Kupplungsaktuators (7) auf die Schaltwelle (61) zu übertragen,
wobei sowohl der Kupplungsverbindungsgetriebemechanismus (8, 8') als auch der Schaltverbindungsgetriebemechanismus (9) außerhalb des Kurbelgehäuses (42) und außerhalb der Motorabdeckung (43a, 43b) angeordnet sind.

2. Das Spreizsitzfahrzeug (1) gemäß Anspruch 1,
das ferner einen Fahrzeugkarosserierahmen (FR) aufweist, an dem der Motor (4) angebracht ist, wobei
die Kupplung (5) und das Mehrganggetriebe (6) an dem Motor (4) angebracht sind, und
der gemeinsame Schalt-/Kupplungsaktuator (7) an dem Fahrzeugkarosserierahmen (FR) angebracht ist.

3. Das Spreizsitzfahrzeug (1) gemäß Anspruch 1 oder 2, wobei
der zweite Schaltverbindungsarm (93) an der Abtriebsdrehwelle (71) des gemeinsamen Schalt-/Kupplungsaktuators (7) befestigt ist und der zweite Kupplungsverbindungsarm (83) an der Schaltwelle (61) befestigt ist.

4. Das Spreizsitzfahrzeug (1) gemäß einem der Ansprüche 1 bis 3, wobei
die Kupplungsverbindungsstange (82, 82') und die Schaltverbindungsstange (92) derart angeordnet sind, dass sich dieselben entlang einer Ebene senkrecht zu der Fahrzeugbreitenrichtung des Spreizsitzfahrzeugs erstrecken.

5. Das Spreizsitzfahrzeug (1) gemäß einem der Ansprüche 1 bis 4, wobei
die Kupplung (5) von einem Innendruck-Typ ist und in einer Draufsicht des Spreizsitzfahrzeugs (1) in der Fahrzeugbreitenrichtung rechts von einer Mittellinie des Spreizsitzfahrzeugs (1) angeordnet ist.

6. Das Spreizsitzfahrzeug (1) gemäß einem der Ansprüche 1 bis 5, wobei
der gemeinsame Schalt-/Kupplungsaktuator (7) weiter in Rückwärtsrichtung als ein Zylinder (418) des Motors (4) und weiter in Aufwärtsrichtung als das Kurbelgehäuse (42) angeordnet ist.

7. Das Spreizsitzfahrzeug (1) gemäß einem der Ansprüche 1 bis 6, wobei
der Motor (4) ein Kettenrad (SP) umfasst, über das eine Antriebskraft von dem Mehrganggetriebe (6) ausgegeben wird, und
die Schaltwelle (61) in Oben-Unten-Richtung des Spreizsitzfahrzeugs (1) weiter oben als das Kettenrad (SP) angeordnet ist.

8. Das Spreizsitzfahrzeug (1) gemäß einem der Ansprüche 1 bis 7, wobei
der Kupplungsverbindungsgetriebemechanismus (8, 8') und der Schaltverbindungsgetriebemechanismus (9) derart konfiguriert sind, dass sich der Kupplungsbetätigungsnocken (51) über einen Drehwinkel dreht, der nicht kleiner als ein Drehwinkel der Schaltwelle (61) ist.

## Revendications

1. Véhicule à selle (1) comprenant :
un moteur (4) présentant un mécanisme de puissance (41), un carter de vilebrequin (42) et un capot de moteur (43a, 43b), le mécanisme de puissance (41) incluant un vilebrequin (411) et étant configuré pour générer de la puissance pour entraîner le véhicule à selle (1), le carter de vilebrequin (42) supportant le vilebrequin (411), le capot de moteur (43a, 43b) étant attaché au carter de vilebrequin (42) et logeant une partie du mécanisme de puissance (41) ;
un embrayage (5), supporté par le carter de vilebrequin (42) et présentant une came d'actionnement d'embrayage (51), l'embrayage (5) étant configuré pour débrayer et embrayer la transmission de la puissance conformément à la rotation de la came d'actionnement d'embrayage (51) ;
une transmission à vitesses multiples (6), supportée par le carter de vilebrequin (42) et présentant un arbre de changement de vitesse (61), la transmission à vitesses multiples (6) étant configurée pour commuter un étage d'engrenage conformément à la rotation de l'arbre de changement de vitesse (61) ;
un actionneur partagé de changement de vitesse/d'embrayage (7) présentant un actionneur électrique (72) et un arbre de rotation de sortie (71), l'arbre de rotation de sortie (71) étant configuré pour sortir une force de rotation qui est produite par l'actionneur électrique (72), l'actionneur partagé de changement de vitesse/d'embrayage (7) étant configuré pour sortir, par l'intermédiaire de l'arbre de rotation de sortie (71), une telle force de rotation de manière à entraîner l'actionnement de l'embrayage (5) et de la transmission à vitesses multiples (6) ;
un mécanisme de transmission à biellettes d'embrayage (8, 8') présentant un premier bras de biellette d'embrayage (81, 81'), une tige de biellette d'embrayage (82, 82') et un deuxième bras de biellette d'embrayage (83, 83'), le premier bras de biellette d'embrayage (81, 81') étant fixé à la came d'actionnement d'embrayage (51), la tige de biellette d'embrayage (82, 82') étant couplée au premier bras de biellette d'embrayage (81, 81'), le deuxième bras de biellette d'embrayage (83, 83') étant couplé à la tige de biellette d'embrayage (82, 82'), le mécanisme de transmission à biellettes d'embrayage (8, 8') étant configuré pour transmettre une force de rotation de l'arbre de rotation de sortie (71) de l'actionneur partagé de changement de vitesse/d'embrayage (7) à la came d'actionnement d'embrayage (51) ; et
un mécanisme de transmission à biellettes de changement de vitesse (9) présentant un premier bras de biellette de changement de vitesse (91), une tige de biellette de changement de vitesse (92) et un deuxième bras de biellette de changement de vitesse (93), le premier bras de biellette de changement de vitesse (91) étant fixé à l'arbre de changement de vitesse (61), la tige de biellette de changement de vitesse (92) étant couplée au premier bras de biellette de changement de vitesse (91), le deuxième bras de biellette de changement de vitesse (93) étant couplé à la tige de biellette de changement de vitesse (92), le mécanisme de transmission à biellettes de changement de vitesse (9) étant configuré pour transmettre une force de rotation de l'arbre de rotation de sortie (71) de l'actionneur partagé de changement de vitesse/d'embrayage (7) à l'arbre de changement de vitesse (61),
le mécanisme de transmission à biellettes d'embrayage (8, 8') et le mécanisme de transmission à biellettes de changement de vitesse (9) étant tous deux disposés à l'extérieur du carter de vilebrequin (42) et à l'extérieur du capot de moteur (43a, 43b).

2. Véhicule à selle (1) selon la revendication 1,
comprenant en outre un châssis de carrosserie de véhicule, FR, auquel le moteur (4) est attaché, dans lequel
l'embrayage (5) et la transmission à vitesses multiples (6) sont attachés au moteur (4), et
l'actionneur partagé de changement de vitesse/d'embrayage (7) est attaché au châssis de carrosserie de véhicule, FR.

3. Véhicule à selle (1) selon la revendication 1 ou 2, dans lequel
le deuxième bras de biellette de changement de vitesse (93) est fixé à l'arbre de rotation de sortie (71) de l'actionneur partagé de changement de vitesse/d'embrayage (7), et le deuxième bras de biellette d'embrayage (83) est fixé à l'arbre de changement de vitesse (61).

4. Véhicule à selle (1) selon l'une quelconque des revendications 1 à 3, dans lequel
la tige de biellette d'embrayage (82, 82') et la tige de biellette de changement de vitesse (92) sont agencées de manière à s'étendre le long d'un plan perpendiculaire à la direction de la largeur de véhicule du véhicule à selle.

5. Véhicule à selle (1) selon l'une quelconque des revendications 1 à 4, dans lequel
l'embrayage (5) est d'un type à poussée interne, disposé à droite d'une ligne centrale du véhicule à selle (1) dans la direction de la largeur de véhicule dans une vue en plan du véhicule à selle (1).

6. Véhicule à selle (1) selon l'une quelconque des revendications 1 à 5, dans lequel
l'actionneur partagé de changement de vitesse/d'embrayage (7) est disposé plus loin dans la direction arrière qu'un cylindre (418) du moteur (4) et plus loin dans la direction vers le haut que le carter de vilebrequin (42).

7. Véhicule à selle (1) selon l'une quelconque des revendications 1 à 6, dans lequel
le moteur (4) inclut un pignon, SP, par l'intermédiaire duquel une force d'entraînement provenant de la transmission à vitesses multiples (6) est sortie, et
l'arbre de changement de vitesse (61) est disposé plus loin vers le haut que le pignon, SP, dans la direction haut-bas du véhicule à selle (1).

8. Véhicule à selle (1) selon l'une quelconque des revendications 1 à 7, dans lequel
le mécanisme de transmission à biellettes d'embrayage (8, 8') et le mécanisme de transmission à biellettes de changement de vitesse (9) sont configurés de telle sorte que la came d'actionnement d'embrayage (51) tourne autour d'un angle de rotation qui n'est pas inférieur à un angle de rotation de l'arbre de changement de vitesse (61).
